# EUROPÄISCHE PATENTSCHRIFT

(11) **EP 3 833 494 B1**
(45) Veröffentlichungstag und Bekanntmachung des Hinweises auf die Patenterteilung: **09.07.2025**
(21) Anmeldenummer: 19749716.7
(22) Anmeldetag: 02.08.2019
(51) Int. Cl.: B09B 3/40, B09C 1/06, B09B 5/00, F23G 5/00, F23G 7/00, F23G 7/14, B09C 1/00, F23G 5/027, B09B 3/00

(54) **VERFAHREN ZUR REINIGUNG MINERALISCHER FESTSTOFFE UND HOLZMATERIALIEN, VORRICHTUNG FÜR DIESES VERFAHREN UND DEREN VERWENDUNG**
METHOD FOR CLEANING MINERAL SOLID MATERIALS AND WOOD MATERIALS, APPARATUS FOR SAID METHOD AND USE THEREOF
PROCÉDÉ POUR LE NETTOYAGE DE MATIÈRES SOLIDES MINÉRALES ET DE MATÉRIAUX DÉRIVÉS DU BOIS, DISPOSITIF POUR CE PROCÉDÉ ET UTILISATION DES MATIÈRES ET MATÉRIAUX

(30) Priorität: 07.08.2018 DE 102018213210
(43) Veröffentlichungstag der Anmeldung: 16.06.2021
(73) Patentinhaber: Fraunhofer-Gesellschaft zur Förderung der angewandten Forschung e.V., 80686 München (DE)
(72) Erfinder: FRANKE, Matthias, 92237 Sulzbach-Rosenberg (DE); HORNUNG, Andreas, 76185 Karlsruhe (DE); HENSE, Peter, 59510 Lippetal (DE); AIGNER, Jonathan, 92337 Sulzbach-Rosenberg (DE); NIEBERL, Martin, 92224 Amberg (DE)
(86) Internationale Anmeldenummer: PCT/EP2019/070905
(87) Internationale Veröffentlichungsnummer: WO 2020/030552

(56) Entgegenhaltungen:
- CN-U- 207 254 916
- DE-A1- 3 443 039
- DE-A1- 3 706 684
- DE-C1- 19 729 691
- JP-A- H0 889 925
- US-A- 5 253 597
- US-A- 5 799 410
- WU HUI-HUI ET AL: "ZSM-5 crystals grown on the wall of a long tubular reactor as a structured catalyst for cracking of endothermic fuels", APPLIED CATALYSIS A: GENERAL, vol. 423-424, 1 May 2012 (2012-05-01), AMSTERDAM, NL, pages 108 - 113, XP093104251, ISSN: 0926-860X, Retrieved from the Internet <URL:https://www.sciencedirect.com/science/article/pii/S0926860X12000932/pdfft?md5=65373b159b2549cee06f753f57c0a27a&pid=1-s2.0-S0926860X12000932-main.pdf> [retrieved on 20231121], DOI: 10.1016/j.apcata.2012.02.020

## Beschreibung

Die Erfindung betrifft ein Verfahren zur Reinigung von mineralischen Feststoffen, Gemische davon und/oder Holzmaterialien, eine Vorrichtung, die in diesem Verfahren eingesetzt werden kann, und die Verwendung der Vorrichtung zur Reinigung dieser Materialien.

Die DE3443039A1, DE102014108337A1 und EP000002412783A1 beschreiben Verfahren, bei denen Öl, Bitumen oder Teer bzw. Pech in Lösemittel aufgelöst und so die damit verunreinigten Feststoffe aufbereitet werden. Als vorteilhaft bei den genannten Löse- bzw. Extraktionsverfahren wird gesehen, dass für die Behandlung keine hohen Temperaturen notwendig sind. Dadurch wird Energie eingespart und die Feststoffe oder Feststoffgemische werden nicht geschädigt. Nachteilig bei den genannten Verfahren ist, dass für die Auflösung der Kohlenwasserstoffverbindungen größere Mengen an Lösemittel benötigt werden, die im Nachgang zusätzlich aufbereitet und gereinigt werden müssen. Die zusätzlichen Verfahrensschritte stellen einen apparatetechnischen Aufwand und damit verbundene, höhere Investitionskosten dar. Die zur Lösemittelaufbereitung notwendige Energie stellt außerdem einen weiteren Kostenfaktor dar, genauso wie das Lösemittel als zusätzliches Verbrauchsmittel.

Die DE10354242B3 beschreibt ein Verfahren zur mikrobiologischen Dekontamination von mit Schadstoffen belastetem Straßenaufbruch, insbesondere mit PAK (polycyclische aromatische Kohlenwasserstoffe) und/oder Phenolen belastetem pechhaltigen Straßenaufbruch. Auch hier wird als vorteilhaft bei dem genannten Verfahren gesehen, dass für die Behandlung keine hohen Temperaturen notwendig sind. Dadurch wird Energie eingespart und die Feststoffe oder Feststoffgemische werden nicht geschädigt. Nachteilig bei dem genannten Verfahren ist, dass mikrobielle Abbauprozesse sehr langsam ablaufen. Die langsam ablaufenden Abbauprozesse führen zu sehr langen Verweilzeiten des aufzubereitenden Materials im Prozess, welche wiederum die Wirtschaftlichkeit des Verfahrens belasten.

Die DE19833430A1, DE60010533T2, E50932B, EP245655A2, EP1022391A1 und DE102009025361B4 beschreiben Verfahren, bei denen Straßenaufbruch oder kontaminierte Böden thermisch behandelt werden. Die thermische Behandlung umfasst entweder eine direkte Oxidation der organischen Verunreinigungen, Bindemittel und/oder Kontaminanten oder eine Verflüchtigung ebendieser Stoffe bei erhöhten Temperaturen und eine Nachverbrennung der so entstandenen Dämpfe und Gase. Als Vorteil dieser Verfahren wird gesehen, dass bei ausreichend hohen Temperaturen die organischen Verunreinigungen, Bindemittel und/oder Kontaminanten vollständig und bei relativ kurzen Verweilzeiten entfernt werden können. Nachteilig bei den genannten Verfahren ist, dass durch die direkte Verbrennung der organischen Verunreinigungen, Bindemittel und/oder Kontaminanten oder durch die Nachverbrennung der Behandlungsdämpfe große Mengen an Rauchgasen entstehen. Die zusätzlichen Verfahrensschritte zur Rauchgasaufbereitung, wie Entstaubung, Entstickung und Entschwefelung stellen einen zusätzlichen apparatetechnischen Aufwand und damit verbundene Investitionskosten dar. Die dafür notwendige Energie und Verbrauchsmittel stellen außerdem weitere Kostenfaktoren dar. Als Nachteil bei der thermischoxidativen Reinigung oder Dekontamination sind grundsätzlich auch die hohen Behandlungstemperaturen aufzuführen. In der 17. BImSchV §6 Satz 1 ist vorgeschrieben, dass die bei der Verbrennung von Abfällen oder Stoffen entstehenden Verbrennungsgase nach der letzten Verbrennungsluftzuführung eine Mindesttemperatur von 850 °C erlangen müssen. Diese hohen Temperaturen können in mineralischen Feststoffen und Feststoffgemischen zu Rissen führen, wodurch sich ihre mechanischen Eigenschaften verschlechtern, sodass sie für den Straßenbau nicht mehr eingesetzt werden können. Grund dafür ist die Volumenexpansion von Quarzgestein beim Überschreiten einer Temperatur von 573 °C, die auf eine Veränderung der Kristallstruktur zurückzuführen ist und im Allgemeinen als Quarzsprung bezeichnet wird. Quarz ist in einer Vielzahl gängiger Gesteinsarten in unterschiedlichen Anteilen enthalten. Deshalb kann übermäßiges Erhitzen aufgrund des Quarzsprunges auch zur Schädigung fast aller mineralischen Feststoffe und Feststoffgemische führen. Die damit verbundenen Qualitätseinbußen erschweren ihre Rückführung in den Wirtschaftskreislauf. Die bereits genannte Patentschrift DE102009025361B4 zeichnet sich in diesem Zusammenhang durch eine Begrenzung der Behandlungstemperaturen von pechhaltigem Straßenaufbruchmaterial auf eine Temperatur, die 600 °C nicht überschreiten darf, aus. Nachteilig hierbei ist allerdings, dass bei einer Verbrennung die Überschreitung einer Maximaltemperatur, in diesem Fall 600 °C, nur dann verhindert wird, wenn die Oxidation gestoppt, also die Zufuhr von Oxidationsluft unterbrochen wird. Die Unterbrechung der Oxidation führt wiederum zu einer verlängerten Verweilzeit des aufzubereitenden Materials im Drehrohrofen, welche wiederum die Wirtschaftlichkeit des Verfahrens belastet. Die zusätzliche vorgeschriebene Nachverbrennungsstufe bringt die bereits genannten Nachteile mit sich.

Bei den vom Markt her bekannten Kaltmisch-, Warmmisch- oder Heißmischverfahren wird Ausbauasphalt mit frischem Bindemittel und frischer Gesteinskörnung vermischt und die Mischung erneut als Straßenbaumaterial eingesetzt. Dabei wird das alte Bindemittel nicht entfernt. Diese Art des Asphaltrecyclings ist in Deutschland für Straßenaufbruch mit teerhaltigem Bindemittel nicht erlaubt. Somit kann diese Art von Recyclingverfahren nur für bituminösen Straßenaufbruch eingesetzt werden. Ein Nachteil ergibt sich allerdings auch durch das Verbleiben von gealtertem bituminösen Bindemittel auf der Oberfläche der Feststoffe. Das gealterte Bitumen vermischt sich nicht optimal mit dem frischen Bitumen, sodass ein zu hoher Anteil an Recyclingasphalt zu einer schlechten Qualität des Neuasphaltes führt.

Die EP254602A1 und WO2008110486A1 beschreiben Verfahren, bei denen Salzschmelzen eingesetzt werden, um Bitumen sowie Feststoffe und Feststoffgemische voneinander zu trennen. Nachteilig hierbei ist, dass geschmolzene Salze sehr empfindlich gegenüber Verunreinigungen reagieren und sich leicht degenerieren, wodurch sich ihre Eigenschaften wie beispielsweise die Schmelztemperatur verändern. Des Weiteren wirken geschmolzene Salze in Gegenwart von Wasser und/oder Sauerstoff sehr korrosiv. Sowohl der Einsatz eines weiteren, sich schnell degenerierenden Betriebsmittels, als auch der höhere, notwendige konstruktive Aufwand in Form von korrosionsbeständigen Materialien für die mit geschmolzenen Salzen in Kontakt stehenden Apparateteile führen zu höheren Betriebs- bzw. Investitionskosten und belasten somit die Wirtschaftlichkeit des Verfahrens.

Die US4881475A beschreibt ein Verfahren zur Reinigung von kontaminierten Böden. Hierfür werden die kontaminierten Böden in einem rotierenden Ofen pyrolysiert und die Pyrolyseprodukte nachverbrannt. Ein Vorteil beim Einsatz der Pyrolyse zum Entfernen von organischen Verunreinigungen und Kontaminanten ist die Vermeidung von Rauchgasen, die eine aufwendige Aufbereitung notwendig machen. Nachteilig bei diesem Verfahren ist, dass die Pyrolyse bei atmosphärischem Druck stattfindet. Zur vollständigen Entfernung von sehr hochsiedenden Kohlenwasserstoffen sind somit auch sehr hohe Behandlungstemperaturen notwendig, bei denen die Gefahr einer Schädigung der Mineralik durch den Quarzsprung besteht, sowie längere Verweilzeiten, die die Wirtschaftlichkeit des Verfahrens belastet.

Die DE102012103881A1 beschreibt ein Verfahren zur Gewinnung von Kohlenwasserstoffen aus Ölschiefer. Hierbei wird in einem ersten Verfahrensschritt der Ölschiefer mit Heißdampf und bei einer Temperatur zwischen 20 °C und 300 °C und bei reduziertem Absolutdruck getrocknet. In einem zweiten Verfahrensschritt wird der vorgetrocknete Ölschiefer in einem Reaktor weiter aufgeheizt, um die enthaltenen organischen Stoffe ganz oder teilweise zu verflüchtigen und/oder zu pyrolysieren. Nachteilhaft bei diesem Verfahren ist, dass der zweite Verfahrensschritt nicht ebenfalls bei reduziertem Absolutdruck durchgeführt wird. Bei reduziertem Absolutdruck würde die Pyrolyse der organischen Stoffe schneller von statten gehen und das Gesamtverfahren aufgrund der verkürzten Verweilzeiten wirtschaftlicher ablaufen.

Die DE2645199C2 beschreibt ein Verfahren zum Abtrennen von Kohlenwasserstoffen aus kohlenwasserstoffhaltigen Stoffen durch Abdestillation bei vermindertem Druck und erhöhter Temperatur durch selektive Verflüssigung der freigesetzten Dämpfe und getrennter Abführung der Flüssigkeiten. Die US525397 beschreibt ein Verfahren zum Trennen von chemischen Kontaminanten wie volatile und semivolatile, organische, chemische Stoffe sowie polychlorierten Biphenylen und inerten Materialien wie Böden und Schlämmen. Bei dem Verfahren werden kontaminierte Feedmaterialien einem Unterdruck zwischen 66,6 mbar und 533 mbar ausgesetzt, gleichzeitig erhitzt und kontinuierlich die entstehenden Dämpfe abgezogen. Die DE4210926A1 beschreibt eine Schwelanlage zur Sanierung von organotoxischem Erdreich, insbesondere ölkontaminierter oder teerbelasteter Erde durch Schwelung bei 400 °C bis 650 °C in einem Schwelreaktor, Abkühlung und Rückverbringung der gereinigten Erde. Die drei genannten Verfahren besitzen den Vorteil, dass durch die Behandlung der Ausgangsmaterialien mit erhöhter Temperatur und bei Unterdruck- bzw. Vakuumbedingungen kürzere Behandlungsdauern und/oder niedrigere Behandlungstemperaturen notwendig sind, was sich ebenfalls vorteilig auf die Wirtschaftlichkeit der Verfahren auswirkt. Nachteilig ist, dass bei den genannten Verfahren die, für eine vollständige und sichergestellte Reinigung und/oder Dekontamination der mineralischen Feststoffe notwendigen Verweilzeiten nach wie vor eine wirtschaftliche Betriebsweise impraktikabel machen.

Die DE4232353C2 beschreibt ein Verfahren zum beschleunigten, thermischen Spalten synthetischer, organischer Abfälle. Das Verfahren läuft bei 200 °C bis 600 °C einem Druck von 10 mbar bis 450 bar und Verweilzeiten von 1 Minute bis 24 Stunden ab, und die thermische Spaltung wird in Gegenwart von 0,1 Vol.-% bis 10 Vol.-% Sauerstoff durchgeführt. Die bei der thermischen Behandlung entstehenden Gase werden durch Anlegen von Vakuum und/oder Einleiten von Inertgasen aus dem Reaktionsgemisch entfernt. Ähnliche Verfahren sind auch vom Markt her zur Reinigung von Metallteilen, die beim Kunststoffspritzgießen eingesetzt werden, bekannt. Nachteilig bei den beschriebenen Verfahren ist, dass sie sich einzig auf Sauerstoff als reaktives Gas beschränken und weitere Prozessgase und Prozessdämpfe, die eine vorteilhafte Wirkung auf die thermische Zersetzung von synthetischen, organischen Abfällen oder auf das Gesamtverfahren haben, nicht beachten. Zudem beschränken sich die Verfahren allein auf synthetische, organische Stoffe und lassen weitere Einsatzmöglichkeiten, wie die Reinigung und Dekontamination mineralischer Feststoffe und Feststoffgemische von natürlichen Kohlenwasserstoffen oder anorganischen Einzelstoffen oder Stoffgemische außer Acht.

Ein Verfahren zur Vergasung von organischen Stoffen und Stoffgemischen bei Unterdruckbedingungen wird in der DE102008032957A1 beschrieben. Das Verfahren findet bei Temperaturen von 1200 °C bis 1450 °C, bei Drücken von 0,86 bar bis 0,90 bar und unter Zugabe eines Sauerstoff-Wasserdampf-Gemisches statt. Als Nachteil bei diesem Verfahren werden die hohen Behandlungstemperaturen gesehen, die zum einen mineralische Feststoffe oder Feststoffgemische schädigen und somit die Rückführung in den Wirtschaftskreislauf beeinträchtigen würden und zum anderen besonders temperaturbeständige Materialien notwendig machen, die zu hohen Investitionskosten führen.

In der EP896838B1 ist eine Vorrichtung zur Reinigung kontaminierter Materialien von schüttgutfähiger und/oder pastöser Konsistenz beschrieben, die aus wenigstens einer chargenweise beschickbaren Trockenkammer und wenigstens einer separaten, an eine Unterdruckquelle angeschlossenen, chargenweise beschickbaren Dekontaminationskammer besteht. Für beide Kammern ist ein Mischwerk in Form eines Schaufelmischwerkes vorgesehen und beide Kammern sind mit jeweils einer eigenen Kondensatoreinheit verbunden. Nachteilig bei diesem Verfahren ist, dass Trocknung und Dekontamination in zwei separaten Kammern durchgeführt werden. Durch diese Maßnahme verdoppelt sich der apparative Aufwand und damit auch die Investitionskosten.

Die WO2005113721A1 beschreibt ein Verfahren zum Entfernen von Koksablagerungen und Anbackungen an den Innenoberflächen von Steam-Cracking-Anlagen durch die Einspeisung eines Luft- und Wasserdampfgemisches. Als Nachteil bei diesem Verfahren wird gesehen, dass es bei Überdruck abläuft. Setzt man das genannte Verfahren zur Aufbereitung von Feststoffen und Feststoffgemischen ein, würde der erhöhte Druck die Verflüchtigung von organischen Verunreinigungen und/oder Kontaminanten unterdrücken und so die Reinigung bzw. Dekontamination verzögern, was wiederum aufgrund von verlängerten Behandlungszeiten die Wirtschaftlichkeit beeinträchtigen würde. Gleiches wird als nachteilig bei der EP1194498B1 gesehen, die ein Verfahren zur Deasphaltierung von Rückständen durch Recycling von hochsiedenden Materialien beschreibt.

Aus der DE 10 2008 006 719 A1 ist ein Verfahren und eine Vorrichtung zur Reinigung kontaminierter Materialien bekannt, bei welchen in einem geschlossenen System im Chargenbetrieb zumindest eine Trocknungskammer und eine Dekontaminationskammer zusammenwirken, wobei einerseits Maßnahmen zur Minimierung der Strömungsanfälligkeit und zur Erhöhung der Gesamtsicherheit getroffen sind. Weiterhin sind Verfahrensschritte in den Behandlungsablauf des Materials integriert, welche die Reinigungsqualität erhöhen.

Die DE 197 29 691 C1 offenbart ein Verfahren und eine Vorrichtung zur vollständigen Sanierung kontaminierter, imprägnierter Hölzer in unzerkleinerter Form oder der Trocken-Aufbereitung von Frischhölzern, bei gleichzeitig vollständigem rückstandsfreiem Abbau von herausgelösten, ausgetriebenen Schadstoffen. Hierzu werden kontaminierte, imprägnierte Hölzer oder Frischhölzer in abgeschlossenen Behältern aufgeheizt, nachfolgend einem Vakuum ausgesetzt und die ausgetriebenen Stoffe kondensiert und in den Prozeßablauf einer fotokatalytischen Aufbereitungsanlage eingeleitet.

Aus der CN 207254916 U ist eine Vorrichtung bekannt, welche kontaminierte Böden automatisiert reinigen kann. Die Vorrichtung enthält eine Luftzufuhr, eine Erdverarbeitungsvorrichtung für verschmutzten Boden und eine Abgasreinigungsvorrichtung. Die Vorrichtung soll den Vorteile einer hohen Effizienz und geringer Kosten aufweisen.

Ausgehend vom Stand der Technik liegt der Erfindung somit die Aufgabe zugrunde, organische und/oder anorganische, leichtsiedende, schwersiedende und schwerstsiedende Einzelstoffe oder Stoffgemische wirtschaftlich und effektiv, d.h. zuverlässig, weitestgehend vollständig und mit hoher Sicherheit, von mineralischen Feststoffen und Feststoffgemischen zu reinigen bzw. diese zu entfernen und/oder zu dekontaminieren.

Die Aufgabe wird erfindungsgemäß durch ein Verfahren nach Anspruch 1, ein Verfahren nach Anspruch 9, eine Vorrichtung nach Anspruch 10 und eine Verwendung nach Anspruch 15 gelöst. Vorteilhafte Weiterbildungen der Erfindung finden sich in den Unteransprüchen.

Erfindungsgemäß wird ein Verfahren zur Reinigung von mineralischen Feststoffen und mineralischen Feststoffgemischen vorgeschlagen, bei dem diese bei einer Temperatur von etwa 60 °C oder mehr und bei einem Unterdruck behandelt werden und diese Behandlung in Gegenwart eines Prozessgases und/oder eines Prozessdampfes erfolgt.

Mit diesem Verfahren, vor allem auch in den nachfolgend beschriebenen Ausführungsformen, können auch Holzmaterialien mit organischen Schadstoffen, wie Bahnschwellen, gereinigt werden. Aus Gründen der Einfachheit wird das erfindungsgemäße Verfahren nachfolgend für mineralische Feststoffe und deren Gemische veranschaulicht, wobei darauf hingewiesen wird, dass es analog auch für Holzmaterialien mit organischen Schadstoffen durchgeführt werden kann.

Ferner wird erfindungsgemäß eine Vorrichtung vorgeschlagen, die insbesondere in diesem Verfahren eingesetzt werden kann, die einen Reaktor mit einer Mantelheizung mit einer Mehrzahl von Öffnungen und/oder Düsen zur Zuführung des Prozessgases und/oder des Prozessdampfes und eine Vakuumpumpe umfasst.

Der Begriff "Reinigung von mineralischen Feststoffen oder mineralischen Feststoffgemischen" bedeutet, dass von diesen organische und/oder anorganische, leichtsiedende, schwersiedende und schwerstsiedende Einzelstoffe oder Stoffgemische entfernt werden bzw. sie von diesen dekontaminiert werden.

Das erfindungsgemäße Verfahren und die erfindungsgemäße Vorrichtung lösen diese Aufgabe und verbessern die aufgeführten Nachteile des Standes der Technik, indem mineralische Feststoffe und Feststoffgemische im Unterdruckbereich, bei erhöhten Temperaturen und unter Zugabe von Prozessgasen und/oder Prozessdämpfen aufbereitet werden. Die Verflüchtigung organischer und/oder anorganischer, leichtsiedender, schwersiedender und schwerstsiedender Einzelstoffe oder Stoffgemische bei erhöhten Temperaturen wird durch negative Relativdrücke unterstützt, denn mit dem Absinken des Druckes sinken in der Regel auch die Siedetemperaturen der Einzelstoffe, welche dadurch bei einer niedrigeren Temperatur in die Dampfphase übergehen. Die Zugabe von Prozessgasen und/oder Prozessdämpfen bewirkt, neben der thermischen Spaltung der organischen und/oder anorganischen, leichtsiedenden, schwersiedenden und schwerstsiedenden Einzelstoffe oder Stoffgemische, die durch die erhöhten Temperaturen hervorgerufen wird, ein zusätzliches Spalten bzw. Cracken der bereits dampfförmigen oder noch nicht verflüchtigten Einzelstoffe, wobei darauf hingewiesen wird, dass Cracken nur bei organischen Stoffen erfolgen kann. Unter dem Begriffen "Prozessgas" bzw. "Prozessdampf" werden somit Gase und Dämpfe verstanden, mit denen diese Effekte erreicht werden können. Vor Allem hochmolekulare Verbindungen werden durch das Reformieren mit beispielsweise Wasserdampf oder durch Oxidation mit Oxidationsmittel wie beispielsweise (Luft-)Sauerstoff oder Wasserstoffperoxid in niedermolekulare Stoffe umgesetzt, die wiederrum einen niedrigeren Siedepunkt besitzen und daher leichter verflüchtigt werden können. Versuche mit teerhaltigem Straßenaufbruch haben zu dem vollkommen unerwarteten Ergebnis geführt, dass durch die Zugabe von beispielsweise Wasserdampf eine sehr gute Entfernung des organischen Bindemittels und eine bessere Dekontamination von polycyclischen aromatischen Wasserstoffen erzielt wird. Die Einleitung von Prozessgasen oder Prozessdämpfen kann gezielt zu einer Verbesserung des Dekontaminations- und Reinigungsergebnisses eingesetzt werden.

In einigen Ausführungsformen kann die Menge des Prozessgases und/oder die Menge des Prozessdampfes etwa 0,01 bis etwa 50 % der Masse des zu behandelnden Materials, beispielsweise etwa 0,1 bis etwa 25 %, z.B. etwa 0,01 bis etwa 5 % betragen.

Aus dem Stand der Technik sind bereits verschiedene Verfahren bekannt, bei denen mit der Wahl bzw. Einstellung der Prozessparameter Temperatur, Druck und Verweilzeit eine schonende und sichergestellte Reinigung und/oder Dekontamination von Feststoffen und Feststoffgemischen möglich ist. Gegenüber dem Stand der Technik zeichnet sich das erfindungsgemäße Verfahren durch eine zusätzliche Behandlung der Feststoffe und Feststoffgemische mit Prozessgasen, wie beispielsweise Luft, Sauerstoff, Ozon, Kohlenmonoxid, Inertgasen, wie beispielsweise Stickstoff, sowie Mischungen davon, und/oder Prozessdämpfen wie beispielsweise Wasserdampf, dampfförmiges Wasserstoffperoxid, dampfförmiges Ammonika, dampfförmige Säuren und Laugen sowie Mischungen davon, während des Vakuumpyrolyseprozesses aus. Durch eine gepulste und/oder stetige Zugabe von Prozessgasen und/oder Prozessdämpfen wird ein zusätzlicher Reinigungs- bzw. Dekontaminationseffekt erreicht. Erfindungsgemäß werden mehrere Vorteile erreicht:
(1) Bei sonst gleichen Druck- und Temperaturbedingungen sowie Verweilzeiten werden die Feststoffe oder Feststoffgemische besser gereinigt und/oder dekontaminiert.
(2) Bei sonst gleichen Druck- und Temperaturbedingungen kann das gleiche Reinigungs- bzw. Dekontaminationsergebnis bei kürzeren Verweilzeiten erzielt werden.
(3) Bei sonst gleichen Temperaturbedingungen und Verweilzeiten kann das gleiche Reinigungs- bzw. Dekontaminationsergebnis bei höheren Absolutdrücken erzielt werden.
(4) Bei sonst gleichen Druckbedingungen und Verweilzeiten kann das gleiche Reinigungs- bzw. Dekontaminationsergebnis bei niedrigeren Temperaturen erzielt werden.

Letzterer Punkt ist besonders vorteilhaft bei der thermo-chemischen Aufbereitung von Feststoffen und Feststoffgemischen, bei der die Überschreitung einer gewissen Temperatur zur Schädigung der Feststoffe und Feststoffgemische führen und so deren Rückführung in den Wirtschaftskreislauf erschweren würde (Beispiel Behandlung von teerhaltigem Straßenaufbruch; Stichwort "Quarzsprung").

Einer oder die Kombination mehrerer der genannten Vorteile führt zu einer insgesamt gesteigerten Wirtschaftlichkeit des erfindungsgemäßen Verfahrens gegenüber der aus dem Stand der Technik bekannten Verfahren. Im Weiteren wird durch eine gepulste und/oder stetige Zugabe des Prozessgases und/oder des Prozessdampfes auch die sonst bei der Pyrolyse übliche Ablagerung von Koksrückständen auf den Oberflächen der Feststoffe und Feststoffgemische reduziert.

Bei der Aufbereitung von Ausbauasphalt ergibt sich durch das erfindungsgemäße Verfahren und die erfindungsgemäße Vorrichtung ein weiterer Vorteil: Indem das Bindemittel von den mineralischen Feststoffen und Feststoffgemischen entfernt wird, kann eine für den Straßenbau notwendige Qualität der mineralischen Feststoffe vorausgesetzt der Rezyklatanteil in Neuasphalt deutlich erhöht werden. Der Rezyklatanteil ist bei den gängigen Kalt-, Warm- und Heißmischverfahren begrenzt, da sich gealtertes Bitumen nicht optimal mit dem frischen Bitumen vermischt, weshalb ein zu hoher Anteil an Recyclingasphalt zu einer schlechten Qualität des Neuasphaltes führt.

Beim erfindungsgemäßen Verfahren zur thermo-chemischen Aufbereitung von mineralischen Feststoffen oder Feststoffgemischen werden organische und/oder anorganische, leichtsiedende, schwersiedende und/oder schwerstsiedende Einzelstoffe und/oder Stoffgemische verflüchtigt und so die mineralischen Feststoffe oder Feststoffgemische gereinigt und/oder dekontaminiert.

Bei dem erfindungsgemäßen Verfahren können die aufzubereitenden Feststoffe oder Feststoffgemische grob zerkleinert in den Reaktor, z.B. einen Pyrolysereaktor, eingebracht werden, beispielsweise mit einer Korngröße von etwa 500 mm oder weniger, z.B. etwa 200 mm oder weniger oder z.B. etwa 100 mm oder weniger. Die Korngröße kann durch an sich bekannte Siebung ermittelt werden.

Das erfindungsgemäße Verfahren kann kontinuierlich, semikontinuierlich und in batchbetriebsweise durchgeführt werden.

Im Reaktor kann sich in einigen Ausführungsformen kein Sauerstoff oder nur unterstöchiometrische Mengen an Sauerstoff befinden.

In einigen Ausführungsformen kann der mineralische Feststoff ausgewählt sein unter Straßenaufbruch, insbesondere teerhaltigem Straßenaufbruch, und belasteten Böden.

Das erfindungsgemäße Verfahren wird bei einer Temperatur von etwa 60 °C oder mehr durchgeführt, beispielweise etwa 60 °C bis etwa 1200 °C, z.B. etwa 250 °C bis etwa 600 °C, z.B. etwa 250 °C bis zur Temperatur, bei der mit einer Qualitätseinbuße der Feststoffe zu rechnen ist. In einigen Ausführungsformen kann das Verfahren bei einer Temperatur von etwa 250 °C bis etwa 600 °C durchgeführt werden. Ist die Rückführung der mineralischen Feststoffe oder Feststoffgemische in den Wirtschaftskreislauf ohne Qualitätseinbußen beabsichtigt, kann die Aufbereitung besonders bevorzugt zwischen etwa 250 °C und derjenigen Temperatur stattfinden, bei der mit einer Veränderung der physikalisch-chemischen Eigenschaften der mineralischen Feststoffe und Feststoffgemische und damit einhergehenden Qualitätseinbußen zu rechnen ist (z.B. "Quarzsprung" bei etwa 573 °C), oder maximal etwa 20 °C über dieser Temperatur.

Das Aufheizen der mineralischen Feststoffe kann direkt oder indirekt geschehen.

Das erfindungsgemäße Verfahren kann in einigen Ausführungsformen bei einem Unterdruck durchgeführt werden, d.h. bei einem Druck, der geringer als der Normaldruck ist, d.h. bei Absolutdrücken beispielsweise zwischen etwa 0,01 mbar und etwa 1013 mbar oder etwa 40 mbar bis etwa 800 mbar oder etwa 50 mbar bis etwa 500 mbar, oder anders formuliert bei negativen Relativdrücken.

Bei dem erfindungsgemäßen Verfahren können Evakuieren und Erhitzen des Reaktorinnenraumes gleichzeitig oder nacheinander stattfinden.

Die Verweilzeit der aufzubereitenden mineralischen Feststoffe oder Feststoffgemische im Reaktor beträgt zwischen etwa 0,5 Sekunden und etwa 24 Stunden oder etwa 0,5 Sekunden bis etwa 3 Stunden oder etwa 0,5 Sekunden bis etwa 20 Minuten, beispielsweise zwischen etwa 0,5 Sekunden und einer Verweilzeit, bei der der Gehalt an Verunreinigungen und/oder Kontaminationen einen festgelegten tolerierbaren Wert unterschreitet. Als Verweilzeit wird dabei diejenige Zeit verstanden, die der zu behandelnde Feststoff im Reaktor verweilt. Diese entspricht üblicherweise der Zeit, in der das erfindungsgemäße Verfahren im Reaktor durchgeführt wird, also der Feststoff bei der angegebenen Temperatur und dem Unterdruck mit dem Prozessgas und/oder dem Prozessdampf behandelt wird.

Während der thermo-chemischen Aufbereitung der mineralischen Feststoffe und Feststoffgemische im Unterdruckbereich werden in den Reaktorinnenraum Prozessgase wie beispielsweise aber nicht abschließend Luft, Sauerstoff, Ozon, Kohlenstoffmonoxid usw., und/oder Inertgase wie beispielsweise aber nicht abschließend Kohlenstoffdioxid, Stickstoff, usw. sowie Mischungen davon, und/oder Prozessdämpfe wie beispielsweise aber nicht abschließend Wasserdampf, dampfförmiges Wasserstoffperoxid, dampfförmiger Ammoniak, dampfförmige Säuren oder Laugen sowie Mischungen davon, eingeleitet.

Produktgase und Produktdämpfe können durch den angelegten Unterdruck und/oder durch Spülen mit einem Inertgas, wie beispielsweise Stickstoff, CO₂, Edelgase u.a., oder durch Spülen mit Prozessgasen und/oder Prozessdämpfen aus den mineralischen Feststoffen oder Feststoffgemischen ausgetrieben und aus dem Reaktionsraum entfernt werden.

Ferner kann in einer bevorzugten Ausführungsform der Reaktor erst mit einem Inertgas gespült und aufgeheizt werden, ehe das Prozessgas und/oder der Prozessdampf eingebracht werden.

Das Material im Reaktorinnenraum kann bewegt werden, beispielsweise durch eine Bewegung des Reaktors und/oder mit Hilfe von Rühr- bzw. Mischorganen.

Pyrolysedämpfe können in einer Kondensatoreinheit vollständig oder teilweise kondensiert und von den Produktgasen getrennt werden, wodurch ein Kondensat erhalten werden kann.

Das Kondensat kann in einem Sammelbehälter aufgefangen werden.

Das aufgefangene Kondensat kann stofflich und/oder thermisch verwertet oder entsorgt werden.

Die freiwerdende Kondensationsenergie bei der Kondensation der Dämpfe und/oder die fühlbare Energie der Produktdämpfe und Produktgase können zur Trocknung der aufzubereitenden, mineralischen Feststoffe und Feststoffgemische, zum Erzeugen der Prozessdämpfe und/oder anderen, dem Fachmann bekannten Arten der thermischen Integration genutzt werden.

Die Produktgase können thermisch verwertet, als Prozessgas oder Inertgas zum Spülen des Reaktors verwendet, gesammelt und/oder entsorgt werden.

In einigen Ausführungsformen kann die Behandlung mit dem Prozessgas und/oder dem Prozessdampf in Gegenwart eines katalytisch aktiven Materials (Katalysator) für Spalt- und Crackreaktionen erfolgen.

Wie bereits vorstehend erwähnt, ist Gegenstand der vorliegenden Erfindung ferner eine Vorrichtung insbesondere zur Durchführung des erfindungsgemäßen Verfahrens, wobei die erfindungsgemäße Vorrichtung einen Reaktor mit einer Mantelheizung mit einer Mehrzahl an Öffnungen und/oder Düsen zur Zuführung des Prozessgases und/oder des Prozessdampfes und eine Vakuumpumpe (10) umfasst.

In einigen Ausführungsformen kann der Reaktor drehbar gelagert sein. Beispielsweise kann der Reaktor ein Drehrohrofen sein.

In einigen Ausführungsformen kann der drehbar gelagerte Reaktor im Innenraum mindestens einen Mitnehmer zur Bewegung des mineralischen Feststoffes oder Feststoffgemisches aufweisen.

In einigen Ausführungsformen kann eine Wand des Reaktors und/oder ein Mitnehmer zumindest teilweise aus katalytisch aktivem Material (Katalysator) für Spalt- und Crackreaktionen ausgebildet sein oder eine innere Oberfläche des Reaktors und/oder eine Oberfläche des Mitnehmers zumindest teilweise mit einem solchen katalytisch aktiven Material beschichtet sein.

In einigen Ausführungsformen können die Öffnung und/oder die Düse in einem Abschnitt der Mantelheizung vorliegen, der während der Reinigung mit dem mineralischen Feststoff oder Gemisch bei jeder Umdrehung einmal in Kontakt kommt.

In einigen Ausführungsformen kann die erfindungsgemäße Vorrichtung weiterhin eine Kondensatoreinheit aufweist, mit der Produktgase und/oder Produktdämpfe kondensiert werden. Die Kondensatoreinheit kann beispielsweise ein Rohrbündelwärmetauscher sein. An der Kondensatoreinheit kann ein Sammelbehälter für die Kondensate angebracht sein.

Der Reaktor, alle Verbindungsleitungen und sonstige Einheiten können gegenüber der Umgebung dicht sein, d.h. es findet kein oder ein vernachlässigbar geringer Stoffaustausch zwischen dem Inneren des Reaktors und der Umgebung statt.

Die Art der Einbringung der Prozessgase und/oder Prozessdämpfe in den Reaktorinnenraum kann derart gestaltet sein, dass ein intensiver Kontakt zwischen Prozessgasen und oder Prozessdämpfen und den aufzubereitenden mineralischen Feststoffen oder Feststoffgemischen sichergestellt ist. Zusätzliche Einbauten oder Rühr-/Mischorgane können zur weiteren Intensivierung des Kontaktes zwischen mineralischen Feststoffen oder Feststoffgemischen und Prozessgasen und/oder Prozessdämpfen eingesetzt werden.

Nachfolgend werden die Wirkungen des erfindungsgemäßen Verfahrens beschrieben.

Die Erhitzung von organischen Verunreinigungen und/oder Kontaminanten enthaltende, mineralische Feststoffe oder Feststoffgemische auf vorstehend angegebene Temperaturen von etwa 60 °C bis beispielsweise etwa 1200 °C bei Abwesenheit von Sauerstoff bewirkt zunächst eine Verdampfung von Wasser und leichtsiedenden organischen Stoffen, und mit zunehmender Temperatur auch eine Verdampfung höhersiedender organischer Stoffe und zunehmend auch eine thermische Spaltung bzw. Zersetzung der organischen Stoffe.

Die negativen Relativdrücke während der Aufbereitung bewirken eine Senkung der Siedetemperaturen, sodass Wasser sowie organische und/oder anorganische Stoffe schon bei niedrigeren Temperaturen in die Dampfphase übergehen. Die negativen Relativdrücke haben auf die mineralischen Feststoffe oder Feststoffgemische keine Auswirkung. Insbesondere die Temperatur, bei der der Quarzsprung stattfindet, wird durch Unterdruckbedingungen nicht beeinflusst.

Durch die Zugabe von Prozessgasen wie beispielsweise Luft oder O₂ und/oder Prozessdämpfen wie beispielsweise Wasserdampf während der thermo-chemischen Aufbereitung von mineralischen Feststoffen oder Feststoffgemischen werden zusätzliche, positive Verflüchtigungseffekte erzielt. Die organischen Stoffe werden so nicht nur aufgrund der erhöhten Temperaturen, sondern auch durch Reaktionen mit Prozessgasen und/oder Prozessdämpfen weiter gespalten und zerkleinert. In der Regel sinkt mit dem Molekulargewicht auch die Siedetemperatur der organischen Stoffe, sodass auch bei moderaten Temperaturen sehr hochsiedende, organische Verunreinigungen und Kontaminanten durch die Behandlung mit Prozessgasen und Prozessdämpfen verflüchtigt und so von den mineralischen Feststoffen und Feststoffgemischen entfernt werden können. Zusätzlich können feste, kohlenstoffhaltige Rückstände der Pyrolyse, namentlich Pyrolysekoks, durch Reaktion mit Prozessgasen und Prozessdämpfen von der Oberfläche der mineralischen Feststoffe und Feststoffgemische entfernt oder zumindest reduziert werden. Durch die Zugabe von Wasserdampf wird zudem der Partialdruck der organischen und/oder anorganischen leichtsiedenden, schwersiedenden und schwerstsiedenden Einzelstoffe und/oder Stoffgemische im Reaktionsraum abgesenkt, was zu einer verbesserten Verdampfung bzw. Verflüchtigung ebendieser Stoffe führt.

Die Zugabe von Prozessgasen und Prozessdämpfen erhöht die Wirtschaftlichkeit des Verfahrens und ermöglicht eine zuverlässige Entfernung organischer Verunreinigungen und Kontaminanten. Wegen der zusätzlichen positiven Zersetzungs- und Verflüchtigungseffekte, die durch die zugegebenen Prozessgase und Prozessdämpfe entstehen, können die Prozessparameter Temperatur, Druck und/oder Verweilzeit wirtschaftlicher gewählt werden. So kann die Temperatur niedriger gewählt werden, was zu einer Energieersparnis führt.

Gleiches gilt für einen höheren Absolutdruck. Durch kürzere Verweilzeiten des aufzubereitenden Materials kann insgesamt mehr Material in der gleichen Zeit aufbereitet werden. Wird keiner der drei Prozessparameter verändert, wird durch die Zugabe der Prozessgase und Prozessdämpfe ein besseres Reinigungs- und Dekontaminationsergebnis erzielt und so sichergestellt, dass Verunreinigungen und Kontaminanten bis zu einem gewünschten oder vorgeschriebenen Grad entfernt werden. Auch die Veränderungen von zwei oder mehr der genannten Parameter sind im Sinne einer erhöhten Wirtschaftlichkeit und einer sichergestellten Reinigung und/oder Dekontamination denkbar.

Die Entfernung der entstandenen Produktgase und Produktdämpfe aus dem Reaktor ermöglicht die Trennung des Gas- /Dampfgemisches außerhalb des Reaktors und verhindert die Rekondensation und damit einhergehende erneute Verunreinigung der mineralischen Feststoffe und Feststoffgemische bei deren Abkühlung.

Durch die Bewegung des Materials im Reaktorinnenraum wird erreicht, dass die Wärme in der Schüttung aus mineralischen Feststoffen und Feststoffgemischen gleichmäßiger verteilt ist, dass unreagiertes Material an die Reaktionsoberfläche befördert wird, wo der Übergang in die Dampfphase leichter stattfindet und dass der Kontakt mit den Prozessgasen und Prozessdämpfen intensiviert wird.

Durch die Kondensation der Pyrolysedämpfe in einer Kondensatoreinheit werden sie von den Produktgasen getrennt. So können sowohl Produktgase als auch Produktflüssigkeiten einer gesonderten für sie optimalen Weiterverwendung zugeführt werden.

Durch die thermische Integration fühlbarer oder latenter Wärme wird der Wirkungsgrad des Verfahrens verbessert und mit ihm auch die Wirtschaftlichkeit.

Durch die thermische Verwertung der Produktgase können Primärenergieträger eingespart werden, durch ihre Verwendung als Prozessgas oder Inertgas können Betriebsmittel eingespart werden. Beide Maßnahmen führen zu Kostensenkungen und damit zu einer verbesserten Wirtschaftlichkeit.

Das Verfahren und die Vorrichtung zur thermo-chemischen Aufbereitung von mineralischen Feststoffen wurden entwickelt und können angewendet werden für die Entfernung von organischen und/oder anorganischen, leichtsiedenden, schwersiedenden und schwerstsiedenden Einzelstoffen oder Stoffgemischen von mineralischen Feststoffen oder Feststoffgemischen. Als Beispiel für einen Einsatzstoff kann pech- bzw. teerhaltiges Straßenaufbruchmaterial angeführt werden. Durch das Verfahren kann das teer- bzw. pechhaltige, organische Bindemittel und die darin enthaltenen Schadstoffe, polycyclische aromatische Kohlenwasserstoffe (PAK) und Phenole, von der Gesteinskörnung abgetrennt und diese so gereinigt und dekontaminiert werden. Durch das Verfahren werden die Gesteinskörnungen nicht geschädigt, sodass es zu keinen Qualitätseinbußen kommt und die mineralischen Feststoffe wieder als Straßenbaumaterial oder für andere Anwendungen einsetzbar sind.

Das Verfahren kann auch auf bituminöses Straßenaufbruchmaterial angewendet werden. Dieses Material ist zwar nicht mit PAK belastet und muss daher nicht dekontaminiert werden, die mineralischen Feststoffe sind aber mit gealtertem Bindemittel umhüllt. Eine Abtrennung des gealterten Bindemittels und die damit einhergehende Reinigung der mineralischen Feststoffe kann in manchen Fällen erwünscht sein.

Das erfindungsgemäße Verfahren kann auch auf andere Verunreinigungen und Kontaminationen außer Straßenbindemittel angewendet werden. Mit Hilfe des Verfahrens können alle Kohlenwasserstoffe von mineralischen Feststoffen entfernt werden. Solange Einzelstoffe oder Stoffgemische verflüchtigbar sind, d.h. wenn sie unter bestimmten Prozessbedingungen in die Dampf- oder Gasphase überführt werden können, ist es mit Hilfe des Verfahrens möglich diese von Feststoffen oder Feststoffgemischen abzutrennen. Dies gilt, in Abhängigkeit der Siedepunkte der jeweiligen Stoffe, auch für anorganische Einzelstoffe oder Stoffgemische.

Nachfolgend soll die Erfindung anhand von Figuren ohne Beschränkung des allgemeinen Erfindungsgedankens näher erläutert werden. Dabei zeigt

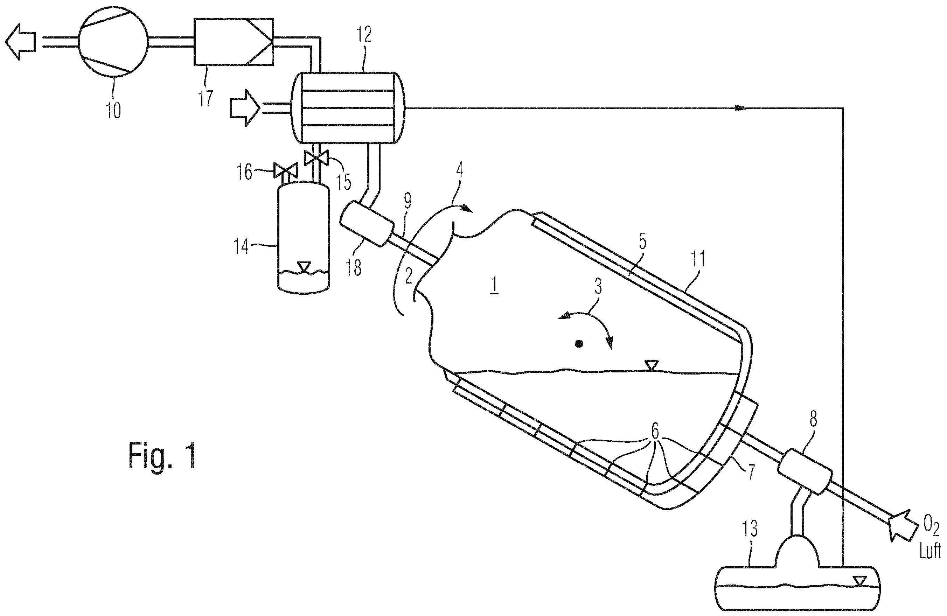

Fig. 1 eine erfindungsgemäße Vorrichtung zur Dekontamination von mineralischen Feststoffen.

Das erfindungsgemäße Verfahren wird nachfolgend beispielhaft unter Bezugnahme auf die erfindungsgemäße Vorrichtung gemäß der Fig. 1 beschrieben.

Bei einer möglichen Verfahrensausführung wird teerhaltiger Straßenaufbruch im Batchbetrieb und mit Hilfe von Wasserdampf und Sauerstoff thermo-chemisch aufbereitet. Ein mögliches Reaktor- und Verfahrensdesign wird anhand der Fig. 1 erläutert.

Der Reaktor 1 ist ein Trommelreaktor der einseitig mit einer Belade- und Entnahmeöffnung 2 zum Befüllen und Entnehmen der Feststoffe oder Feststoffgemische ausgestattet ist. Da in dem Reaktor 1 eine Pyrolyse durchgeführt wird, kann er auch als Pyrolysereaktor bezeichnet werden. Die Belade- und Entnahmeöffnung 2 kann mit einer Reinigungsvorrichtung und Verschlussvorrichtung einfach, schnell und sicher gesäubert und verschlossen werden.

Der Reaktor 1 kann zum Füllen und Entleeren nach oben bzw. unten gekippt werden. Die mögliche Kippbewegung ist in Fig. 1 mit Pfeilen 3 dargestellt. Während der Behandlung kann der Reaktor 1 in eine mit einem Pfeil 4 dargestellte Rotationsbewegung um dessen Achse versetzt werden. An der Innenseite des Reaktors sind Mitnehmer 5 vorgesehen, die zusammen mit der Rotationsbewegung für eine Bewegung und Mischung des teerhaltigen Straßenaufbruches sorgen. Zudem sind die Innenseite des Reaktors und die Mitnehmer mit für Dampfreformierung katalytisch aktivem Material beschichtet. Für die Zugabe der Prozessgase und Prozessdämpfe sind am Reaktormantel mehrere Öffnungen und/oder Düsen 6 vorgesehen. Die Öffnungen und/oder Düsen 6 sind nicht über den gesamten Mantel gleichmäßig verteilt, sondern nur in einem Ausschnitt des Mantels vorhanden, der während des Betriebes mit dem teerhaltigen Straßenaufbruch bei jeder Umdrehung einmal in Kontakt steht. Zuführleitungen für Wasserdampf und Sauerstoff sind mit den Öffnungen bzw. Düsen verbunden und drehen sich mit dem Reaktor 1. Die Zuführleitung 7 wird über eine Drehrohrdurchführung 8 beschickt, die sich auf der der Belade- und Entnahmeöffnung 2 gegenüberliegenden Seite außerhalb des Reaktors 1 befindet. Dadurch, dass die Rohrleitungen nicht auf der gleichen Seite wie die Belade- und Entnahmeöffnung 2 liegen, müssen Zuleitungen für Gase und Dämpfe nicht nach jeder Charge demontiert werden. Eine Absaugleitung 9 für Produktgase und Produktdämpfe ist an der Belade- und Entnahmeöffnung 2 vorgesehen.

Im Ausführungsbeispiel ist der Reaktor 1 zunächst in einer Position, bei der die Belade- und Entnahmeöffnung 2 nach oben zeigt. Über die Belade- und Entnahmeöffnung 2 wird der Reaktor 1 mit grob vorzerkleinertem, teerhaltigem Straßenaufbruch bis zu etwa einem Drittel des Reaktorvolumens befüllt. Die Korngröße kann etwa 500 mm oder weniger, z.B. etwa 200 mm oder weniger oder z.B. etwa 100 mm oder weniger betragen. Die Belade- und Entnahmeöffnung 2 wird mit der Säuberungsvorrichtung gesäubert und anschließend mit der Verschlussvorrichtung gasdicht verschlossen.

Der befüllte Reaktor wird mit einer geringen Geschwindigkeit, beispielsweise mit etwa 0,5 bis etwa 10 Umdrehungen pro Minute (rpm), z.B. etwa 0,5 bis etwa 5 rpm oder z.B. etwa 0,5 bis etwa 2 rpm gedreht 4. Zeitgleich erfolgt das Evakuieren des Reaktors und aller nachgeschalteten Anlagenteile auf einen Druck zwischen etwa 20 und etwa 750 mbar mit der Vakuumpumpe 10 und das Erhitzen des Reaktors auf eine Temperatur von etwa 350 °C bis etwa 550 °C mit einer Mantelheizung 11. An der Mantelheizung 11 sind kleine Aussparungen für die Zuführleitungen 7 zu den Öffnungen bzw. Düsen 6 vorgesehen. Evakuieren und Aufheizen des Reaktors erfolgen schnell, beispielsweise in mehr als etwa 0 bis etwa 120 Minuten, wie mehr als etwa 0 bis etwa 30 Minuten oder wie mehr als etwa 0 bis etwa 5 Minuten, um wirtschaftliche Durchsatzzeiten zu erreichen. Ab einer Reaktorinnentemperatur von etwa 150 °C wird bei jeder Umdrehung Wasserdampf über die Öffnungen bzw. Düsen 6 zugegeben. Statt dem Eindüsen von Wasser in den Reaktor kann auch feuchtes Ausgangsmaterial verwendet bzw. das Ausgangsmaterial vorher befeuchtet werde. Dies ist auch mit Säuren und Laugen möglich. Gegen Ende der Behandlungszeit wird anstelle von Wasserdampf Sauerstoff zugegeben. Die Zugabe des Prozessdampfes und Prozessgases erfolgt immer dann, wenn sich der Mantelbereich, an dem die Öffnungen bzw. Düsen 6 vorliegen, auf der Unterseite des Reaktors 1 befinden und somit die aufzubereitende Feststoffschüttung direkt über ihnen. So durchströmt Prozessdampf und Prozessgas die Schüttung aus mineralischen Feststoffen von unten nach oben und ein intensiver Kontakt zwischen Wasserdampf und teerhaltigem Straßenaufbruch wird sichergestellt und Kurzschlussströmungen vermieden.

In Abhängigkeit der Belastung an polycyclischen aromatischen Kohlenwasserstoffen (PAK) verbleibt der teerhaltige Straßenaufbruch so lange im Reaktor, bis der Gehalt an PAK und Phenolen in der Schüttung aus mineralischen Feststoffen zuverlässig auf einen Wert unterhalb der gesetzlich vorgeschriebenen Höchstgrenze absinkt. Die während der Aufheiz- und Evakuierungsphase und der Behandlungsphase entstehenden Produktgase und Produktdämpfe werden durch den angelegten Unterdruck über die Öffnung am Verschlussflansch 9 aus dem Reaktor abgezogen. Im Ausführungsbeispiel unterstützt die Zugabe von Wasserdampf einerseits die Spaltung der organischen und/oder anorganischen, leichtsiedenden, schwersiedenden und schwerstsiedenden Bindemittelbestandteile und andererseits die Austreibung und Entfernung von Produktgasen und Produktdämpfen aus den mineralischen Feststoffen und dem Reaktor durch die Verringerung des Partialdruckes der Kohlenwasserstoffverbindungen und durch die entstehende Spülströmung.

Die Produktgase und Produktdämpfe gelangen nach dem Reaktor 1 in eine Kondensatoreinheit 12. Im Ausführungsbeispiel ist die Kondensationseinheit 12 ein Rohrbündelwärmetauscher, durch dessen Mantelraum die Produktgase und Produktdämpfe strömen und kondensiert werden. Durch die Rohre des Rohrbündelwärmetauschers fließt als Kühlmedium Wasser, das durch die latente und spürbare Energie der Produktgase und Produktdämpfe erwärmt wird und als Speisewasser für den Prozessdampferzeuger 13 verwendet wird. Durch die Vorwärmung des Speisewassers wird der Gesamtwirkungsgrad der Anlage gesteigert.

In vorteilhafter Weise kann alternativ dazu die Kondensation im Rohrbündel und nicht im Mantelraum des Wärmetauschers erfolgen.

An der Unterseite des Rohrbündelwärmetauschers ist ein vakuumfester Kondensatsammelbehälter 14 angebracht, der durch ein Ventil 15 vom Rohrbündelwärmetauscher getrennt werden kann. Mit Hilfe eines zweiten Ventils 16 kann der vakuumfeste Kondensatsammelbehälter 14 belüftet werden, sodass sich im Inneren Umgebungsdruck einstellt und er einfach und sicher von der Kondensatoreinheit 12 entfernt und ausgetauscht werden kann. Das im Sammelbehälter 14 aufgefangene Kondensat kann einem Entsorgungsfachbetrieb übergeben werden.

Zwischen Kondensatoreinheit 12 und Vakuumpumpe 10 befindet sich eine Einheit zum Abscheiden von Staub sowie nichtkondensierter Dämpfe und Schadstoffe 17. Durch die Abscheidung von Feststoffen und Dämpfen wird die Pumpe geschont, und es wird vermieden, dass in der Auspuffleitung der Vakuumpumpe 10 Dämpfe auskondensieren und zu Betriebsstörungen führen. Die Vakuumpumpe 10 erzeugt den Unterdruck, der zum einen zu einer beschleunigten Verflüchtigung der Teerinhaltsstoffe und/oder der Spaltprodukte führt und zum anderen die Produktgase und Produktdämpfe aus dem Reaktor abzieht. Das Produktgas, das die Vakuumpumpe 10 verlässt wird einer Feuerung zugeführt und die so entstandene Wärme für die Wasserdampferzeugung 13 oder Vortrocknung des teerhaltigen Straßenaufbruches eingesetzt.

Nach Beendigung der thermo-chemischen Behandlung wird der Reaktor 1 von den Drehrohrdurchführungen 8, 18 getrennt. Die Belade- und Entnahmeöffnung 2 wird geöffnet und der Reaktor 1 so gekippt, dass diese nach unten zeigt. Unter fortgesetzter Drehung des Reaktors 1 wird so der Inhalt in warmen Zustand auf eine Transporteinrichtung entleert, die das Material entweder direkt in ein Asphaltmischwerk oder zu einem Lagerplatz transportiert. Ist der Reaktor 1 vollständig entleert, wird er zurückgekippt, sodass die Belade- und Entnahmeöffnung 2 nach oben zeigt und er neu befüllt werden kann.

Die Erfindung wird weiterhin anhand der nachfolgenden Versuche erläutert, wobei in der Tabelle 1 die Versuchsbedingungen und -ergebnisse dargestellt sind.

**Tabelle 1:**

| Stoff | | Teerhaltiger Straßenaufbruch | Feststoff nach Behandlung | Feststoff nach Behandlung | Feststoff nach Behandlung |
|---|---|---|---|---|---|
| Zugegebenes Gas/Dampf | - | - | N2 | H2O | O2 |
| Prozesstemperatur | °C | - | 450 | 450 | 450 |
| Prozessdruck | mbar (abs) | - | 50 | 50 | 50 |
| Verweilzeit bei Prozesstemperatur | min | - | 0 | 0 | 0 |
| Naphtalen | mg/kg TS | 0,1 | 0,10 | 0, 10 | 0,10 |
| Acenaphthylen | | 0,1 | 0,10 | 0, 10 | 0,10 |
| Acenapthen | | 58,1 | 0,80 | 0,58 | 0,14 |
| Fluoren | | 44,9 | 2,65 | 0,51 | 0,14 |
| Phenanthren | | 238 | 12,89 | 3, 91 | 3,25 |
| Anthracen | | 81,5 | 3,03 | 0,95 | 0,34 |
| Fluoranthen | | 448 | 26,59 | 7, 48 | 11,54 |
| Pyren | | 226 | 21,76 | 5, 62 | 8,25 |
| Bezo(a)anthracen | | 189 | 14,67 | 5,02 | 7,19 |
| Chrysen | | 148 | 14,71 | 4,35 | 7,48 |
| Benzo(b)fluoranthen | | 105 | 17,21 | 6,59 | 2,14 |
| Benzo(k)fluoranthen | | 78,8 | 5,97 | 2, 48 | 0,78 |
| Benzo(a)pyren | | 111 | 17,33 | 6,07 | 1,41 |
| Dibenzo(a,h)anthracen | | 70,8 | 1,15 | 1,18 | 0,38 |
| Benzo(g,h,i)perylen | | 81,8 | 7,91 | 4,46 | 1,12 |
| Indeno(1,2,3-c,d)pyren | | 55,6 | 10,61 | 4,94 | 1,15 |
| Summe PAK | mg/kg TS | 1936,7 | 157, 49 | 54,35 | 45,50 |
| Phenolindex | mg/L | 0,021 | 0,036 | 0,019 | 0,0073 |

Bei Experimenten im Technikumsmaßstab wurde teerhaltiger Straßenaufbruch mit einer PAK-Belastung von 1.936,7 mg/kg TS bei einer Temperatur von 450 °C und einem Absolutdruck von 50 mbar behandelt. Die Verweilzeit im Reaktor nach Evakuieren und Aufheizen auf die Prozesstemperatur von 450 °C betrug 0 min. Ab einer Prozesstemperatur von 150 °C wurden intermittierend die angegebenen Gase bzw. Dämpfe in den Reaktor eingesprüht.

Die Behandlung mit H₂O-Dampf und mit O₂ lieferten deutlich bessere Reinigungsergebnisse als bei Zugabe von N₂, bei sonst gleichen Bedingungen.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Beschreibung oder die Ansprüche ,erste' und 'zweite' Merkmale definieren, so dient dies der Unterscheidung gleichartiger Merkmale ohne eine Rangfolge festzulegen.

## Patentansprüche

1. Verfahren zur Reinigung von mineralischen Feststoffen und mineralischen Feststoffgemischen, wobei diese in einem Reaktor bei einer Temperatur von etwa 60 °C oder mehr und bei einem Unterdruck behandelt werden, wobei die Behandlung in Gegenwart eines Prozessgases und/oder eines Prozessdampfes erfolgt **dadurch gekennzeichnet, dass** der Reaktor erst mit einem Inertgas gespült und aufgeheizt wird und dann das Prozessgas und/oder der Prozessdampf eingebracht werden.

2. Verfahren nach Anspruch 1, **dadurch gekennzeichnet, dass** der mineralische Feststoff ausgewählt ist unter Straßenaufbruch und belasteten Böden.

3. Verfahren nach Anspruch 1 oder 2, **dadurch gekennzeichnet, dass** die Temperatur etwa 60°C bis etwa 1200°C oder etwa 250°C bis etwa 600°C oder etwa 250°C bis zu der Temperatur, bei der mit einer Qualitätseinbuße des Feststoffs oder -gemisches zu rechnen ist, beträgt.

4. Verfahren nach einem der vorhergehenden Ansprüche,
**dadurch gekennzeichnet, dass** der Unterdruck etwa 0,01 mbar bis etwa 1013 mbar oder etwa 40 mbar bis etwa 800 mbar oder etwa 50 mbar bis etwa 500 mbar beträgt.

5. Verfahren nach einem der vorhergehenden Ansprüche,
**dadurch gekennzeichnet, dass** die Behandlung des mineralischen Feststoffes und des mineralischen Feststoffgemisches während etwa 0,5 Sekunden bis etwa 24 Stunden oder etwa 0,5 Sekunden bis etwa 3 Stunden oder etwa 0,5 Sekunden bis etwa 20 Minuten erfolgt.

6. Verfahren nach einem der vorhergehenden Ansprüche,
**dadurch gekennzeichnet, dass** das Prozessgas ausgewählt ist unter Luft, Sauerstoff, Ozon, Kohlenstoffmonoxid, und deren Mischungen und/oder
dass der Prozessdampf ausgewählt ist unter Wasserdampf, dampfförmigem Wasserstoffperoxid, dampfförmigem Ammoniak, dampfförmigen Säuren, dampfförmigen Laugen und deren Mischungen.

7. Verfahren nach einem der vorhergehenden Ansprüche,
**dadurch gekennzeichnet, dass** entstehende Pyrolysedämpfe mit einer Kondensatoreinheit (12) zumindest teilweise kondensiert und abgetrennt werden, wodurch ein Kondensat erhalten wird.

8. Verfahren nach einem der vorhergehenden Ansprüche,
**dadurch gekennzeichnet, dass** die Behandlung mit dem Prozessgas und/oder dem Prozessdampf in Gegenwart eines katalytisch aktiven Materials erfolgt.

9. Verfahren zur Reinigung von Holzmaterial mit organischen Schadstoffen, wie Bahnschwellen, diese in einem Reaktor bei einer Temperatur von etwa 60 °C oder mehr und bei einem Unterdruck behandelt werden, wobei die Behandlung in Gegenwart eines Prozessgases und/oder eines Prozessdampfes erfolgt, **dadurch gekennzeichnet, dass** der Reaktor erst mit einem Inertgas gespült und aufgeheizt wird und dann das Prozessgas und/oder der Prozessdampf eingebracht werden.

10. Vorrichtung zur Reinigung von Holzmaterial mit organischen Schadstoffen, wie Bahnschwellen, mineralischen Feststoffen und mineralischen Feststoffgemischen gemäß einem Verfahren nach einem der Ansprüche 1 bis 9, wobei die Vorrichtung einen Reaktor (1) mit einer Mantelheizung (11) mit einer Mehrzahl an Öffnungen und/oder Düsen (6) zur Zuführung eines Prozessgases und/oder eines Prozessdampfes und eine Vakuumpumpe (10) umfasst, **dadurch gekennzeichnet, dass** eine Wand des Reaktors (1) und/oder mindestens ein Mitnehmer (5) aus einem katalytisch aktiven Material für Spalt- und Crackreaktionen ausgebildet oder eine innere Oberfläche des Reaktors (1) und/oder eine Oberfläche der Mitnehmer (5) zumindest teilweise mit einem katalytisch aktiven Material für Spalt- und Crackreaktionen beschichtet ist.

11. Vorrichtung nach Anspruch 10, **dadurch gekennzeichnet, dass** der Reaktor (1) drehbar gelagert ist oder
dass der Reaktor (1) ein Drehrohrofen ist.

12. Vorrichtung nach Anspruch 11, **dadurch gekennzeichnet, dass** der drehbar gelagerte Reaktor (1) im Innenraum mindestens einen Mitnehmer (5) zur Bewegung des mineralischen Feststoffes oder Feststoffgemisches aufweist

13. Vorrichtung nach einem der Ansprüche 10 bis 12, **dadurch gekennzeichnet, dass** die Öffnungen und/oder Düsen (6) in einem Abschnitt der Mantelheizung (11) vorliegen, der während der Reinigung mit dem mineralischen Feststoff oder mineralischen Feststoffgemisch bei jeder Umdrehung einmal in Kontakt kommt.

14. Vorrichtung nach einem der Ansprüche 10 bis 13, **dadurch gekennzeichnet, dass** die Vorrichtung weiterhin eine Kondensatoreinheit (12) aufweist, mit der Produktgase und/oder Produktdämpfe kondensiert werden, insbesondere wobei die Kondensatoreinheit (12) ein Rohrbündelwärmetauscher ist.

15. Verwendung der Vorrichtung nach einem der Ansprüche 10 bis 14 zur Reinigung von mineralischen Feststoffen, beispielsweise Straßenaufbruch oder belasteten Böden, oder Holzmaterial mit organischen Schadstoffen, wie Bahnschwellen.

## Claims

1. Method for purifying mineral solids and mixtures of mineral solids, which are treated in a reactor at a temperature of about 60°C or more and at a negative pressure, the treatment being carried out in the presence of a process gas and/or a process steam, **characterized in that** the reactor is first rinsed with an inert gas and heated and then the process gas and/or the process steam is introduced.

2. Method according to claim 1, **characterized in that** the mineral solid is selected from broken-up road material and polluted soils.

3. Method according to claim 1 or 2, **characterized in that** the temperature is about 60°C to about 1200°C or about 250°C to about 600°C or about 250°C up to the temperature at which a quality loss of the solid or mixture of solids has to be expected.

4. Method according to any one of the preceding claims, **characterized in that** the negative pressure is about 0.01 mbar to about 1013 mbar or about 40 mbar to about 800 mbar or about 50 mbar to about 500 mbar.

5. Method according to any one of the preceding claims, **characterized in that** the treatment of the mineral solid and the mixture of mineral solids is carried out for about 0.5 seconds to about 24 hours or for about 0.5 seconds to about 3 hours or for about 0.5 seconds to about 20 minutes.

6. Method according to any one of the preceding claims, **characterized in that** the process gas is selected from air, oxygen, ozone, carbon monoxide and the mixtures thereof and/or
**in that** the process steam is selected from water vapor, vaporous hydrogen peroxide, vaporous ammonia, vaporous acids, vaporous basic solutions and the mixtures thereof.

7. Method according to any one of the preceding claims, **characterized in that** generated pyrolysis vapors are at least partially condensed and separated by means of a condenser unit (12) so as to obtain a condensate.

8. Method according to any one of the preceding claims, **characterized in that** the treatment with the process gas and/or the process steam takes place in the presence of a catalytically active material.

9. Method for purifying wood material with organic pollutants, such as railroad ties, which are treated in a reactor at a temperature of about 60°C or more and at a negative pressure, the treatment being carried out in the presence of a process gas and/or a process steam, **characterized in that** the reactor is first rinsed with an inert gas and heated and then the process gas and/or the process steam is introduced.

10. Device for purifying wood material with organic pollutants, such as railroad ties, mineral solids and mixtures of mineral solids by the method according to any one of claims 1 to 9, the device comprising a reactor (1) with a jacket heating (11) having a plurality of openings and/or nozzles (6) for supplying a process gas and/or a process steam and a vacuum pump (10),
**characterized in that** a wall of the reactor (1) and/or at least one driver (5) is formed from a catalytically active material for decomposition and cracking reactions or an inner surface of the reactor (1) and/or a surface of the drivers (5) is at least partially coated with a catalytically active material for decomposition and cracking reactions.

11. Device according to claim 10, **characterized in that** the reactor (1) is rotatably mounted, or **in that** the reactor (1) is a rotary kiln.

12. Device according to claim 11, **characterized in that** the interior of the rotatably mounted reactor (1) has at least one driver (5) for moving the mineral solid or mixture of solids.

13. Device according to any one of claims 10 to 12, **characterized in that** the openings and/or nozzles (6) are present in a section of the jacket heating (11), which during the purification comes into contact with the mineral solid or mixture of mineral solids once per each revolution.

14. Device according to any one of claims 10 to 13, **characterized in that** the device further includes a condenser unit (12), by means of which product gases and/or product vapors are condensed, in particular the condenser unit (12) being a shell-and-tube heat exchanger.

15. Use of the device according to any one of claims 10 to 14 for purifying mineral solids, for example broken-up road materials or polluted soils, or wood material with organic pollutants, such as railroad ties.

## Revendications

1. Procédé de purification de solides minéraux et de mélanges de solides minéraux, dans lequel ceux-ci sont traités dans un réacteur à une température d'environ 60 °C ou plus et à une dépression, le traitement étant effectué en présence d'un gaz de traitement et/ou d'une vapeur de traitement,
**caractérisé en ce que** le réacteur est d'abord rincé avec un gaz inerte et chauffé, puis le gaz de traitement et/ou la vapeur de traitement y sont introduits.

2. Procédé selon la revendication 1,
**caractérisé en ce que** les solides minéraux sont choisis parmi les déblais routiers et les sols pollués.

3. Procédé selon la revendication 1 ou 2,
**caractérisé en ce que** la température est d'environ 60 °C à environ 1200 °C ou d'environ 250 °C à environ 600 °C ou d'environ 250 °C à la température à laquelle on peut s'attendre à une dégradation de la qualité des solides ou du mélange de solides.

4. Procédé selon l'une des revendications précédentes,
**caractérisé en ce que** la dépression est d'environ 0,01 mbar à environ 1013 mbars ou d'environ 40 mbars à environ 800 mbars ou d'environ 50 mbars à environ 500 mbars.

5. Procédé selon l'une des revendications précédentes,
**caractérisé en ce que** le traitement des solides minéraux et du mélange de solides minéraux est effectué pendant environ 0,5 seconde à environ 24 heures ou environ 0,5 seconde à environ 3 heures ou environ 0,5 seconde à environ 20 minutes.

6. Procédé selon l'une des revendications précédentes,
**caractérisé en ce que** le gaz de traitement est choisi parmi l'air, l'oxygène, l'ozone, le monoxyde de carbone, un gaz inerte et leurs mélanges, et/ou **en ce que** la vapeur de traitement est choisie parmi la vapeur d'eau, le peroxyde d'hydrogène à l'état de vapeur, l'ammoniac à l'état de vapeur, les acides à l'état de vapeur, les bases à l'état de vapeur et leurs mélanges.

7. Procédé selon l'une des revendications précédentes,
**caractérisé en ce que** les vapeurs de pyrolyse produites sont au moins partiellement condensées avec une unité de condensation (12) et séparées, ce qui permet d'obtenir un condensat.

8. Procédé selon l'une des revendications précédentes,
**caractérisé en ce que** le traitement avec le gaz de traitement et/ou la vapeur de traitement est effectué en présence d'un matériau catalytiquement actif.

9. Procédé de purification de matériaux à base de bois contenant des polluants organiques, tels que des traverses de chemin de fer, qui sont traités dans un réacteur à une température d'environ 60 °C ou plus et à une dépression, le traitement étant effectué en présence d'un gaz de traitement et/ou d'une vapeur de traitement,
**caractérisé en ce que** le réacteur est d'abord rincé avec un gaz inerte et chauffé, puis le gaz de traitement et/ou la vapeur de traitement y sont introduits.

10. Dispositif de purification de matériaux à base de bois contenant des polluants organiques, tels que des traverses de chemin de fer, des solides minéraux et des mélanges de solides minéraux par un procédé selon l'une des revendications 1 à 9, le dispositif comprenant un réacteur (1) avec un chauffage d'enveloppe (11) ayant une pluralité d'ouvertures et/ou de buses (6) pour l'amenée d'un gaz de traitement et/ou d'une vapeur de traitement et une pompe à vide (10),
**caractérisé en ce qu'**une paroi du réacteur (1) et/ou au moins un entraîneur (5) est formé(e) d'un matériau catalytiquement actif pour des réactions de fission et de craquage ou une surface intérieure du réacteur (1) et/ou une surface des entraîneurs (5) est revêtue au moins partiellement d'un matériau catalytiquement actif pour des réactions de fission et de craquage.

11. Dispositif selon la revendication 10,
**caractérisé en ce que** le réacteur (1) est monté rotatif ou **en ce que** le réacteur (1) est un four tubulaire rotatif.

12. Dispositif selon la revendication 11,
**caractérisé en ce que** le réacteur (1) monté rotatif comporte dans son espace intérieur au moins un entraîneur (5) pour déplacer les solides minéraux ou le mélange de solides minéraux.

13. Dispositif selon l'une des revendications 10 à 12,
**caractérisé en ce que** les ouvertures et/ou buses (6) se situent dans une portion du chauffage d'enveloppe (11) qui entre en contact avec les solides minéraux ou avec le mélange de solides minéraux une fois à chaque tour pendant la purification.

14. Dispositif selon l'une des revendications 10 à 13,
**caractérisé en ce que** le dispositif comprend en outre une unité de condensation (12) avec laquelle les gaz et/ou vapeurs produits sont condensés, en particulier l'unité de condensation (12) étant un échangeur de chaleur à faisceau tubulaire.

15. Utilisation du dispositif selon l'une des revendications 10 à 14 pour la purification de solides minéraux, par exemple des déblais routiers ou des sols pollués, ou des matériaux à base de bois contenant des polluants organiques, tels que des traverses de chemin de fer.
